# EUROPEAN PATENT APPLICATION

(11) **EP 4 596 896 A1**
(43) Date of publication of application: **06.08.2025**
(21) Application number: 23869414.5
(22) Date of filing: 01.02.2023
(51) Int. Cl.: F15B 15/08, F15B 15/06

(54) **PNEUMATIC POWER DEVICE**

(30) Priority: 28.09.2022 CN 202211191091
(71) Applicant: Jilin Xiufu Pneumatic Power Co.,Ltd., Songyuan, Jilin 131500 (CN)
(72) Inventor: FENG, Xiufu, Jilin 131500 (CN)
(74) Representative: Ipside
(86) International application number: PCT/CN2023/074092
(87) International publication number: WO 2024/066151

(57) **Abstract**

A pneumatic power device, comprising an annular gas storage container (1), a starting system, and an output system, wherein a plurality of air cylinders (2) are uniformly distributed on an inner peripheral wall of the annular gas storage container in a circumferential direction, inner cavities of cylinder bodies of the air cylinders are in communication with an inner cavity of the annular gas storage container, and racks (4) are arranged on piston rods (3) of the air cylinders; the starting system comprises a power supply, a driver (15), a speed reduction and torque increase mechanism, and a cam (5), wherein the power supply is electrically connected to the driver, the driver is in transmission connection with the cam by means of a speed reduction and torque increase mechanism, and an end portion of the piston rod of each air cylinder abuts against the cam; and the output system comprises a unidirectional transmission mechanism and an output shaft (10), wherein a unidirectional gear (7) at an input end of the unidirectional transmission mechanism meshes with the racks, each rack is in transmission connection with the output shaft by means of the unidirectional transmission mechanism, and rotation is formed between the racks and the output shaft only when the piston rods of the air cylinders extend out. The pneumatic power device has less dependence on existing fuel, can effectively avoid the dependence on thermal energy resources and reduce emissions, is energy-saving and environment-friendly, and further solves the problems of energy crisis and air pollution.

## Description

The present application claims the priority to the Chinese Patent Application No. 202211191091.2, titled "PNEUMATIC POWER DEVICE", filed on September 28, 2022 with the China National Intellectual Property Administration, which is incorporated herein by reference in its entirety.

### FIELD

The present application relates to the technical field of power equipment and, in particular, to a pneumatic power device.

### BACKGROUND

Due to the exploitation of thermal energy resources, a large number of internal combustion engines, boilers and the like emit a huge amount of smoke and exhaust gases into the atmosphere every day. Over time, our ecological environment has been severely damaged, causing immeasurable losses to humanity. Moreover, this energy source is gradually running out. If there is no new energy source to replace it, human production and daily life will be paralyzed in a few decades. Therefore, there is an urgent need to develop a new energy power device to reduce the dependence on thermal energy resources.

### SUMMARY

In view of this, an object of the present application is to provide a pneumatic power device, which can reduce dependence on thermal energy resources and reduce environmental pollution.

In order to achieve the above object, the following technical solutions are provided according to the present application.

A pneumatic power device includes:
an annular gas storage container, wherein multiple pneumatic cylinders are uniformly distributed on an inner circumferential wall of the annular gas storage container in a circumferential direction, with an inner cavity of a cylinder body of each of the pneumatic cylinders being in communication with an inner cavity of the annular gas storage container, and a rack is arranged on a piston rod of the pneumatic cylinder, and has a length direction in parallel to an axial direction of the piston rod of the pneumatic cylinder;
a starting system, including a power supply, a driver, a speed-reducing and torque-increasing mechanism, and a cam, wherein the power supply is electrically connected to the driver, the driver is in transmission connection with the cam via the speed-reducing and torque-increasing mechanism, the cam is coaxially arranged with the annular gas storage container, and an end of the piston rod of each pneumatic cylinder, which is away from the cylinder body of the pneumatic cylinder, abuts against the cam; and
an output system, including a one-way transmission mechanism and an output shaft, wherein one-way gears are arranged at an input end of the one-way transmission mechanism and respectively meshed with the racks, each rack is in transmission connection with the output shaft via the one-way transmission mechanism, and is configured to drive, only when the piston rod of the pneumatic cylinder extends outwards, the one-way gear to rotate the output shaft via the one-way transmission mechanism.

Optionally, the speed-reducing and torque-increasing mechanism includes:
a first gear set, which includes a first driving gear and a first driven gear, wherein the first driving gear is meshed with the first driven gear, the first driving gear is disposed at an output end of the driver, and the number of teeth on the first driving gear is less than that on the first driven gear; and
a second gear set, which includes a second driving gear and a second driven gear, wherein the second driving gear is meshed with the second driven gear, the second driving gear is coaxially connected to the first driven gear, the second driven gear is coaxially connected to the cam, and the number of teeth on the second driving gear is less than that on the second driven gear.

Optionally, the one-way transmission mechanism includes:
one-way gear sets, each of which includes the one-way gear and a third driven gear, wherein the one-way gear is coaxially connected to the third driven gear, and the one-way gear sets are provided in one-to-one correspondence with the racks; and
a driven gear disk, which is coaxially connected to the output shaft and is meshed with the third driven gear of the one-way gear set.

Optionally, the number of teeth on the driven gear disk is greater than that on each of the third driven gears.

Optionally, a rotatable top wheel is provided at the end of the piston rod of the pneumatic cylinder, which is away from the cylinder body of the pneumatic cylinder, and is configured to abut against the cam at the end of the piston rod of the pneumatic cylinder, which is away from the cylinder body of the pneumatic cylinder.

Optionally, the annular gas storage container is equipped with a safety valve, which is used to relieve pressure when the pressure inside the annular gas storage container exceeds the rated value.

Optionally, the pneumatic power device further includes:
a pressure detection device for detecting the pressure inside the annular gas storage container;
a pressure compensation device connected to the power source and having an output end connected to the annular gas storage container; and
a controller having a signal input end connected to the pressure detection device and a signal output end connected to the pressure compensation device, wherein the controller controls, based on the detected value coming from the pressure detection device, the pressure compensation device to compensate for the pressure in the annular gas storage container.

Optionally, the power source is a battery, and the pneumatic power device further includes a generator and a battery level detection device. The generator is connected to the battery, and the battery level detection device is used to detect the battery level. The generator is connected to the output shaft via a clutch. The signal input end of the controller is connected to the battery level detection device, and the signal output end of the controller is connected to the clutch. The controller is configured to control, when the battery level detected by the battery level detection device is lower than a preset value, the clutch to drivingly connect the generator to the output shaft so as to enable the generator to generate electricity for the battery.

Optionally, the driver is an electric motor. The electric motor is connected to the power source via a start switch, and the electric motor is equipped with a speed regulator.

Optionally, the controller is communicated with each of the start switch, the pressure compensation device, and the clutch via a remote control.

As can be seen from the above technical solution, a pneumatic power device provided according to an embodiment of the present application includes an annular gas storage container, a starting system, and an output system. Multiple pneumatic cylinders are uniformly distributed on an inner circumferential wall of the annular gas storage container in a circumferential direction, with an inner cavity of a cylinder body of each of the pneumatic cylinders being in communication with an inner cavity of the annular gas storage container. A rack is arranged on a piston rod of the pneumatic cylinder, with a length direction of the rack being parallel to an axial direction of the piston rod of the pneumatic cylinder. The starting system includes a power supply, a driver, a speed-reducing and torque-increasing mechanism, and a cam. The power supply is electrically connected to the driver, and the driver is in transmission connection with the cam via the speed-reducing and torque-increasing mechanism. The cam is coaxially arranged with the annular gas storage container, and an end of the piston rod of each pneumatic cylinder, which is away from the cylinder body of the pneumatic cylinder, abuts against the cam. The output system includes a one-way transmission mechanism and an output shaft. One-way gears are arranged at an input end of the one-way transmission mechanism and meshed with the racks. Each rack is in transmission connection with the output shaft via the one-way transmission mechanism, and the rack drives, only when the piston rod of the pneumatic cylinder extends outwards, the one-way gear to rotate the output shaft via the one-way transmission mechanism. In operation, gas is firstly injected into the circular gas storage container, so that the pressure inside the annular gas storage container reaches a preset value. Then, the starting system drives the cam to rotate, causing the piston rods of the pneumatic cylinders to reciprocate sequentially. When the convex part of the cam contacts the piston rod, the cam presses against the pneumatic cylinder, causing the piston rod to retract. At this time, although the rack is meshed with the one-way gear of the one-way transmission mechanism, the rack causes the one-way gear to idle without transmitting power. As the cam continues to rotate and its concave part comes into contact with the rod of the pneumatic cylinder, the rod of the pneumatic cylinder extends outwards under the pressure inside the circular gas storage container, and the rack drives the one-way gear to rotate and transmit power. The rotation of the cam causes the piston rods and the racks of the multiple pneumatic cylinders to extend and return sequentially. As long as the cam keeps rotating, the pneumatic cylinders will continuously convert the stored pneumatic energy in the circular gas storage container into mechanical energy for external output. The speed of output depends on the torque output by the driver. The reciprocating motion of the piston rods of the multiple cylinders causes the racks to sequentially and cyclically drive the corresponding one-way gears to rotate, thereby outputting power. It can be seen that, in the present application, the driver of the starting system drives the cam to rotate via the speed-reducing and torque-increasing mechanism, which amplifies the torque output by the driver of the starting system, allowing the driver to drive the cam with a smaller torque. Moreover, the output power of the pneumatic power device can be infinitely amplified, such as by increasing the pressure in the circular gas storage container, increasing the piston area of the pneumatic cylinders, or increasing the number of the pneumatic cylinders. The structural design of the pneumatic power device allows compressed air to be infinitely circulated within the closed-loop system until the sealing members are damaged. This pneumatic power device has low dependence on conventional fuels and mainly utilizes pressure differences to perform work, effectively avoiding reliance on thermal energy resources, reducing emissions, conserving energy, and protecting the environment. It also addresses energy crises and air pollution issues.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description only show some examples of the present application, and for those skilled in the art, other drawings may be obtained based on the provided drawing without any creative efforts.
FIG. 1 is a schematic structural view of an annular gas storage container of a pneumatic power device provided according to an embodiment of the present application;
FIG. 2 is a schematic structural view of an output system of the pneumatic power device provided according to the embodiment of the present application; and
FIG. 3 is a schematic structural view of a starting system of the pneumatic power device provided according to the embodiment of the present application.

List of reference numerals in the drawings:
1 annular gas storage container;
2 pneumatic cylinder;
3 piston rod;
4 rack;
5 cam;
6 top wheel;
7 one-way gear;
8 third driven gear;
9 driven gear disk;
10 output shaft;
11 second driven gear;
12 second driving gear;
13 first driven gear;
14 first driving gear;
15 driver;
16 speed regulator;
17 start switch;
18 battery.

### DETAILED DESCRIPTION OF THE EMBODIMENTS

A pneumatic power device is provided according to the present application to reduce dependence on thermal energy resources and environmental pollution.

The technical solutions according to the embodiments of the present application will be described clearly and completely as follows in conjunction with the drawings in the embodiments of the present application. It is apparent that the described embodiments are only some of the embodiments according to the present application, rather than all the embodiments. All other embodiments obtained by those skilled in the art based on the embodiments of the present application without any creative work fall within the protection scope of the present application.

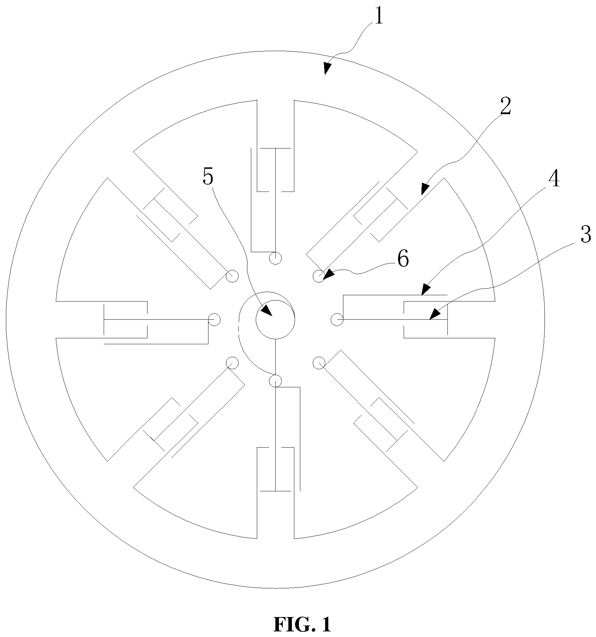

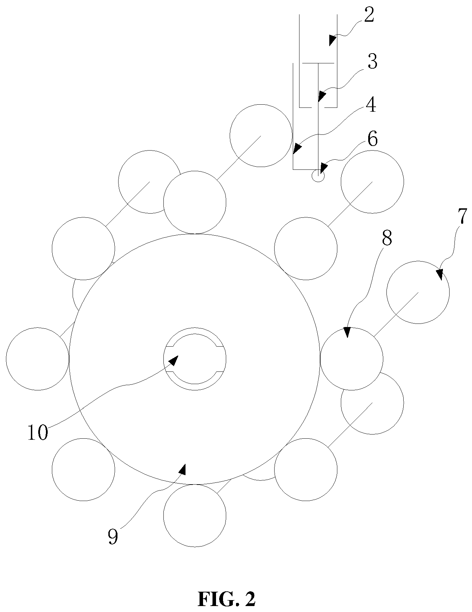

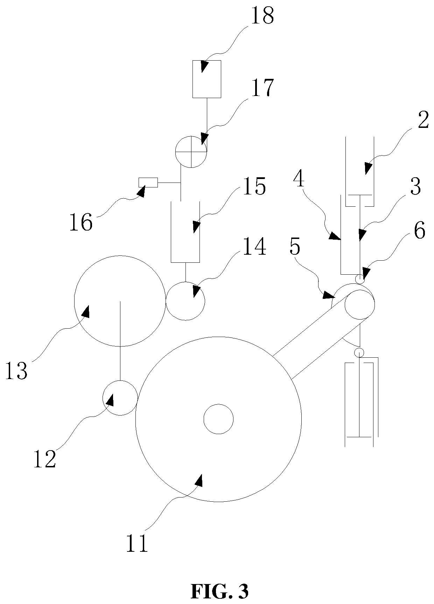

As shown in FIGS. 1 to 3, FIG. 1 is a schematic structural view of an annular gas storage container of a pneumatic power device provided according to an embodiment of the present application; FIG. 2 is a schematic structural view of an output system of the pneumatic power device provided according to the embodiment of the present application; and FIG. 3 is a schematic structural view of a starting system of the pneumatic power device provided according to the embodiment of the present application.

A pneumatic power device provided according to an embodiment of the present application includes an annular gas storage container 1, a starting system, and an output system.

Multiple pneumatic cylinders 2 are evenly distributed on an inner circumferential wall of the annular gas storage container 1 in a circumferential direction. An inner cavity of a cylinder body of each of the pneumatic cylinders 2 is in communication with an inner cavity of the annular gas storage container 1. An axis of the cylinder body of the pneumatic cylinder 2 is arranged along a radial direction of the annular gas storage container 1. A rack 4 is provided on a piston rod 3 of the pneumatic cylinder 2. The rack 4 is connected to the piston rod 3 by a connecting member. A length direction of the rack 4 is parallel to an axial direction of the piston rod 3 of the pneumatic cylinder 2.

The starting system includes a power source, a driver 15, a speed-reducing and torque-increasing mechanism, and a cam 5. The power source may be mains electricity or a battery. The power source is electrically connected to the driver 15. The driver 15 is drivingly connected to the cam 5 via the speed-reducing and torque-increasing mechanism. The cam 5 is coaxially arranged with the annular gas storage container 1. One end of the piston rod 3 of each pneumatic cylinder 2, which is away from the cylinder body of the pneumatic cylinder 2, abuts against the cam 5.

The output system includes a one-way transmission mechanism and an output shaft 10. A one-way gear 7 is arranged at an input end of the one-way transmission mechanism and meshed with the rack 4. Each of the racks 4 is drivingly connected to the output shaft 10 via the one-way transmission mechanism. The rack 4 drives the one-way gear 7 only when the piston rod 3 of the pneumatic cylinder 2 extends outwards so as to rotate the output shaft 10 via the one-way transmission mechanism.

In operation, firstly, gas is filled into the annular gas storage container 1, so that the pressure inside the annular gas storage container 1 reaches a preset value. Then, the starting system is activated to drive the cam 5 to rotate, which causes the piston rods 3 of the pneumatic cylinders 2 to reciprocate sequentially. When the convex portion of the cam 5 contacts the piston rod 3, the cam 5 exerts pressure on the pneumatic cylinder 2, causing the rod of the pneumatic cylinder 2 to retract. At this point, although the rack 4 is meshed with the one-way gear 7 of the one-way transmission mechanism, the rack 4 only causes the one-way gear 7 to idle without transmitting power. As the cam 5 continues to rotate and its concave portion comes into contact with the pneumatic cylinder 2, the rod of the pneumatic cylinder 2 extends outwards under the pressure in the annular gas storage container 1. The rack 4 then drives the one-way gear 7 to rotate and transmit power. The rotation of the cam 5 causes the piston rods 3 and the racks 4 of the multiple pneumatic cylinders 2 to extend and return sequentially. As long as the cam 5 continues to rotate, each of the pneumatic cylinders 2 will cyclically convert the stored pneumatic energy in the annular gas storage container 1 into mechanical energy for continuous external output. The speed of output depends on the torque delivered by the driver 15. The reciprocating motion of the piston rods 3 of the multiple pneumatic cylinders 2 enables the corresponding racks 4 to cyclically and sequentially drive the respective one-way gears 7 to rotate, thereby outputting power.

Compared with the conventional technology, the driver 15 of the starting system of the pneumatic power device provided according to the embodiment of the present application drives the cam 5 to rotate via the speed-reducing and torque-increasing mechanism, which amplifies the torque output by the driver 15 of the starting system. This allows the driver 15 to drive the cam 5 to rotate with a smaller torque, and the output power of the pneumatic power device can also be infinitely amplified, for example, by increasing the pressure in the annular gas storage container 1, increasing the piston area of the pneumatic cylinders 2, or increasing the number of the pneumatic cylinders 2. The structural design of the pneumatic power device described above enables compressed air to be infinitely circulated within a closed-loop system until the sealing members are damaged. This pneumatic power device has low dependence on conventional fuels and mainly utilizes pressure differences to perform work. Air is an abundant renewable resource that can be used as a medium for storing energy and reused repeatedly. This effectively avoids reliance on thermal energy resources, reduces emissions, and is energy-saving and environmentally friendly. It also addresses energy crises and air pollution issues.

Preferably, in an embodiment of the present application, as shown in FIG. 3, the speed-reducing and torque-increasing mechanism includes a first gear set and a second gear set. The first gear set includes a first driving gear 14 and a first driven gear 13 which are meshed with each other. The first driving gear 14 is arranged at the output end of the driver 15, and the number of teeth on the first driving gear 14 is less than that on the first driven gear 13. The second gear set includes a second driving gear 12 and a second driven gear 11 which are meshed with each other. The second driving gear 12 is coaxially connected to the first driven gear 13, and the second driven gear 11 is coaxially connected to the cam 5. A camshaft and the output shaft 10 are concentrically arranged and are driven by different power sources. The cam 5 is connected to the second driven gear 11 via the camshaft, with its power coming from the aforementioned power supply and the driver 15. The power for the output shaft 10 comes from the pneumatic cylinders 2 mentioned above. The number of teeth on the second driving gear 12 is less than that on the second driven gear 11.

Of course, the speed-reducing and torque-increasing mechanism composed of the gears mentioned above is merely a preferred solution provided according to the embodiment of the present application. Any other mechanism such as belt transmission mechanism or sprocket transmission mechanism can also be used as the speed-reducing and torque-increasing mechanism, which will not be limited here.

In an embodiment of the present application, the one-way transmission mechanism includes one-way gear sets and a driven gear disk 9. Each one-way gear set includes a one-way gear 7 and a third driven gear 8 which are coaxially connected to each other. The one-way gear sets are provided in one-to-one correspondence with the racks 4. The driven gear disk 9 is coaxially connected to the output shaft 10 and meshed with the third driven gear 8 of each of the one-way gear sets.

To further optimize the above technical solution, the number of teeth on the driven gear disk 9 is greater than that on the third driven gear 8, thereby also achieving speed reduction and torque increase between the driven gear disk 9 and the third driven gear 8.

Preferably, as shown in FIGS. 1 and 3, a rotatable top wheel 6 is provided at an end of the piston rod 3 of the pneumatic cylinder 2 away from the cylinder body. At the end of the piston rod 3 of the pneumatic cylinder 2 away from the cylinder body, the top wheel 6 abuts against the cam 5, changing the relative motion between the piston rod 3 and the cam 5 from sliding to rolling. This reduces the friction between the piston rod 3 and the cam 5, reducing frictional heat loss while lowering resistance.

In an embodiment of the present application, the annular gas storage container 1 is further provided with a safety valve. The safety valve is used to relieve pressure when the pressure inside the annular gas storage container 1 exceeds the rated value, ensuring the safety of the equipment.

Preferably, the pneumatic power device further includes a pressure detection device, a pressure compensation device, and a controller. The pressure detection device is used to detect the pressure inside the annular gas storage container 1. The pressure compensation device is connected to the power source, and has an output end connected to the annular gas storage container 1. The signal input end of the controller is connected to the pressure detection device, and the signal output end of the controller is connected to the pressure compensation device. The controller controls, based on the detected value coming from the pressure detection device, the pressure compensation device to replenish the pressure in the annular gas storage container 1.

Further, the power source mentioned above is a battery 18, and the pneumatic power device further includes a generator and a battery level detection device. The generator is connected to the battery 18, and the battery level detection device is used to detect the battery level of the battery 18. The generator is connected to the output shaft 10 via a clutch. The signal input end of the controller is connected to the battery level detection device, and the signal output end of the controller is connected to the clutch. The controller is used to, when the battery level detection device detects that the battery level of the battery 18 is below a preset value, control the clutch to drivingly connect the generator to the output shaft 10, so that the generator generates electricity for the battery 18. That is, the electrical energy of the battery 18 comes from the pneumatic power device itself.

Preferably, the driver 15 mentioned above is an electric motor, which is connected to the power source via a start switch 17. When the start switch 17 is closed, the electric motor starts to rotate and output torque. When the start switch 17 is disconnected, the electric motor stops rotating. The electric motor is equipped with a speed regulator 16, by which the user or the controller can adjust the rotation speed of the electric motor, thereby adjusting the output power as needed.

In an embodiment of the present application, the controller described above is communicated with the start switch 17, the pressure compensation device, and the clutch through a remote control. The user or the controller can remotely control the start switch 17, the pressure compensation device, and the clutch through the remote control.

In summary, the output power P of the pneumatic power device satisfies the following calculation formula: P(w) = the kilogram-force (kgf) output by the piston cylinder doing work × the number of revolutions under output shaft load ÷ 60s ÷ 75kg•m.

The above formula is a conclusion drawn through torque coefficient testing instruments and practical equipment tests. The establishment of this formula is of great significance for the production and research and development of pneumatic equipment in the future. Through years of experiments, it has been found that pneumatic power force is elastic, and the optimal peak of pneumatic expansion energy is achieved when the kilogram-force output by the piston cylinder is a multiple of the kilogram-force under the output shaft load, hence deriving the above formula.

A specific example provided by the present application will be described below.

The pneumatic cylinder 2 has a diameter of 180 mm and a piston area of 254 cm². The pressure used is 0.6 MPa. Each annular gas storage container 1 is circumferentially and concentrically provided with eight pneumatic cylinders 2, and the piston rod 3 of each of the pneumatic cylinders 2 is provided with a top wheel 6 and a rack 4. The top wheels 6 of the piston rods 3 of three of the pneumatic cylinders 2 are always rotatably in contact with the cam 5. The force exerted by each top wheel 6 on the cam 5 is 254 cm² × 0.6 MPa = 1524 kg. The total force exerted by the three top wheels 6 on the cam 5 simultaneously is 1524 kg × 3 = 4572 kg. Through the action of the driver 15 and the speed-reducing and torque-increasing mechanism, the frictional resistance to the rotation of the cam 5 is reduced by 85%. The starting system only consumes 15% of the force generated by the output system to achieve the power output of the equipment, which means that only force of 15 kg is needed to return the piston of the pneumatic cylinder 2 on which a force of 100 kg is exerted, allowing the equipment to output 85% of work externally.

It should be noted that all the embodiments in this specification are described in a progressive way, and each embodiment focuses on the differences from other embodiments. The same and similar parts among the embodiments can be referred to each other.

It should be understood that if "system", "device", "unit" and/or "module" are used herein, it is merely a method for distinguishing different assemblies, elements, components, portions or assembly at different levels. However, if other expressions can realize the same purpose, they may be replaced by other expressions.

As shown in the present application and claims, unless the context clearly indicates an exception, the words such as "one", "a", "an" and/or "the" do not specifically refer to the singular, but may also include the plural. Generally speaking, the terms "include" and "comprise" only indicate the inclusion of clearly identified steps and elements, and these steps and elements do not constitute an exclusive list, and a method or device may also include other steps or elements. The elements limited by the statement "comprising (including) a..." do not exclude the existence of other identical elements exist in the process, method, product or apparatus that includes the elements.

In the description of the embodiments of the present application, unless otherwise specified, "/" means or, for example, A/B can mean A or B. The "and/or" herein is only an association relationship that describes the associated objects, which means that there may be three kinds of relationships, for example, A and/or B may mean that there are three cases: A alone, A and B at the same time, and B alone. In addition, in the description of the embodiments of the present application, "multiple" refers to two or more.

If a flowchart is used in the present application, the flowchart is used to explain the operation performed by the system according to the embodiment of the present application. It should be understood that the preceding or subsequent operations are not necessarily performed accurately in sequence. Instead, the steps can be processed in reverse order or simultaneously. In addition, other operations can be added to these procedures, or one or more operations can be removed from these procedures.

It should be noted that in the present application, terms such as "include", "comprise" or any other variants are intended to be non-exclusive. Therefore, an article or a device including a series of elements includes not only the elements but also other elements that are not enumerated, or also include the elements inherent for the article or device. Unless expressively limited otherwise, the statement "comprising (including) one..." does not exclude the case that other similar elements may exist in the process, method, article or device.

The principle and implementations of the present application are described herein by using specific examples, and the description of the above embodiments is only used to help understand the core idea of the present application. It should be noted that, several improvements and modifications may be made by those skilled in the art to the present application without departing from the principle of the present application, and these improvements and modifications also fall within the protection scope of the claims of the present application.

## Claims

1. A pneumatic power device, comprising:
an annular gas storage container, wherein a plurality of pneumatic cylinders are uniformly distributed on an inner circumferential wall of the annular gas storage container in a circumferential direction, with an inner cavity of a cylinder body of each of the pneumatic cylinders being in communication with an inner cavity of the annular gas storage container, and a rack is arranged on a piston rod of each of the pneumatic cylinders, and has a length direction in parallel to an axial direction of the piston rod of the pneumatic cylinder;
a starting system, comprising a power supply, a driver, a speed-reducing and torque-increasing mechanism, and a cam, wherein the power supply is electrically connected to the driver, the driver is in transmission connection with the cam via the speed-reducing and torque-increasing mechanism, the cam is coaxially arranged with the annular gas storage container, and an end of the piston rod of each pneumatic cylinder away from the cylinder body of the pneumatic cylinder abuts against the cam; and
an output system, comprising a one-way transmission mechanism and an output shaft, wherein one-way gears are arranged at an input end of the one-way transmission mechanism and respectively meshed with the racks, each of the racks is in transmission connection with the output shaft via the one-way transmission mechanism, and is configured to drive, only when the piston rod of the corresponding pneumatic cylinder extends outwards, the corresponding one-way gear to rotate the output shaft via the one-way transmission mechanism.

2. The pneumatic power device according to claim 1, wherein the speed-reducing and torque-increasing mechanism comprises:
a first gear set, which comprises a first driving gear and a first driven gear, wherein the first driving gear is meshed with the first driven gear, the first driving gear is disposed at an output end of the driver, and the number of teeth on the first driving gear is less than that on the first driven gear; and
a second gear set, which comprises a second driving gear and a second driven gear, wherein the second driving gear is meshed with the second driven gear, the second driving gear is coaxially connected to the first driven gear, the second driven gear is coaxially connected to the cam, and the number of teeth on the second driving gear is less than that on the second driven gear.

3. The pneumatic power device according to claim 1, wherein the one-way transmission mechanism comprises:
one-way gear sets, each of which comprises a third driven gear and the one-way gear coaxially connected to the third driven gear, wherein the one-way gear sets are provided in one-to-one correspondence with the racks; and
a driven gear disk, which is coaxially connected to the output shaft and is meshed with the third driven gear of each of the one-way gear sets.

4. The pneumatic power device according to claim 3, wherein the number of teeth on the driven gear disk is greater than that on each of the third driven gears.

5. The pneumatic power device according to any one of claims 1 to 4, wherein a rotatable top wheel is provided at the end of the piston rod of each pneumatic cylinder away from the cylinder body of the pneumatic cylinder, and is configured to abut against the cam at the end of the piston rod of the pneumatic cylinder away from the cylinder body of the pneumatic cylinder.

6. The pneumatic power device according to any one of claims 1 to 4, wherein the annular gas storage container is equipped with a safety valve configured to relieve pressure when the pressure inside the annular gas storage container exceeds a rated value.

7. The pneumatic power device according to any one of claims 1 to 4, further comprising:
a pressure detection device configured to detect the pressure inside the annular gas storage container;
a pressure compensation device connected to the power source and having an output end connected to the annular gas storage container; and
a controller having a signal input end connected to the pressure detection device and a signal output end connected to the pressure compensation device, wherein the controller is configured to control, based on a detected value coming from the pressure detection device, the pressure compensation device to supplement the pressure in the annular gas storage container.

8. The pneumatic power device according to claim 7, wherein the power source is a battery, and the pneumatic power device further comprises a generator and a battery level detection device,
wherein the generator is connected to the battery, the battery level detection device is configured to detect a battery level of the battery, and
wherein the generator is connected to the output shaft via a clutch, the signal input end of the controller is connected to the battery level detection device, the signal output end of the controller is connected to the clutch, and the controller is configured to control, when the battery level of detected by the battery level detection device is lower than a preset value, the clutch to drivingly connect the generator to the output shaft so as to enable the generator to generate electricity for the battery .

9. The pneumatic power device according to claim 8, wherein the driver is an electric motor, and
the electric motor is connected to the power source via a start switch, and is equipped with a speed regulator.

10. The pneumatic power device according to claim 9, wherein the controller is communicated with each of the start switch, the pressure compensation device, and the clutch via a remote control.
